(19) Europäisches Patentamt
European Patent Office
Office européen des brevets

(11) Veröffentlichungsnummer: **0 216 242 B1**

(12) # EUROPÄISCHE PATENTSCHRIFT

(45) Veröffentlichungstag der Patentschrift: **29.05.91**

(51) Int. Cl.[5]: **C09B 67/22**, D06P 1/18, //C09B29/085

(21) Anmeldenummer: **86112453.5**

(22) Anmeldetag: **09.09.86**

(54) **Mischungen roter Dispersionsazofarbstoffe.**

(30) Priorität: **20.09.85 DE 3533527**

(43) Veröffentlichungstag der Anmeldung:
**01.04.87 Patentblatt 87/14**

(45) Bekanntmachung des Hinweises auf die Patenterteilung:
**29.05.91 Patentblatt 91/22**

(84) Benannte Vertragsstaaten:
**CH DE FR GB LI**

(56) Entgegenhaltungen:
**EP-A- 0 152 005**
**DE-A- 1 794 402**
**FR-A- 2 383 924**

(73) Patentinhaber: **BAYER AG**

**W-5090 Leverkusen 1 Bayerwerk(DE)**

(72) Erfinder: **Wiegner, Dieter, Dipl.-Ing.**
**Nothauser Feld 4**
**W-5068 Odenthal(DE)**
Erfinder: **Geiger, Heinz, Dipl.-Ing.**
**In der Taufe 6**
**W-5060 Bergisch Gladbach(DE)**
Erfinder: **Lansu, Emile, Dipl.-Ing.**
**Völkingerstrasse 9**
**W-5090 Leverkusen(DE)**
Erfinder: **Brandt, Horst, Dr.**
**Antoniusstrasse 4**
**W-5068 Odenthal(DE)**
Erfinder: **Hamprecht, Rainer, Dr.**
**Im Kerberich 25**
**W-5068 Odenthal(DE)**

EP 0 216 242 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Mischungen von Azofarbstoffen für das Färben von Polyester- und Polyamidfasern, die sich als Ersatz für das anthrachinoide C.I. Disperse Red 60 (C.I.-Nr. 60756) eignen.

Disperse Red 60 gilt weltweit als bedeutendster roter Dispersionsfarbstoff, da dieser auf den genannten Fasermaterialien zu besonders klaren blaustichig roten Färbungen mit hoher Lichtechtheit führt. Andererseits weist dieser Farbstoff, wie fast alle Anthrachinonfarbstoffe, den Nachteil der geringen Farbstärke auf, was inbesondere beim Färben in hohen Farbtiefen eine beträchtliche Kostensteigerung zur Folge hat.

Nachteilig ist weiterhin die Empfindlichkeit von Disperse Red 60 gegenüber Metallionen im Färbebad, weswegen diesem häufig Komplexbildner zugesetzt werden müssen.

Schließlich können bei mangelndem Auswaschen im Anschluß an eine alkalisch-reduktive Nachbehandlung der Polyesterfärbungen Farbtonumschläge auftreten.

Um die Unzulänglichkeiten des Anthrachinonfarbstoffes wenigstens teilweise zu beseitigen, ist bereits vorgeschlagen worden, Disperse Red 60 durch ausgewählte rote Azofarbstoffe zu ersetzen (vgl. DE-A 27 11 130 und 29 37 329).

Während jedoch die Farbstoffe der erstgenannten Patentpublikation bei ansonsten ausgezeichneten Eigenschaften hinsichtlich des Ziehvermögens nicht voll befriedigen, sind die Farbstoffe gemäß DE-A 29 37 329 wegen ihrer geringeren Sublimierechtheit und ihres etwas stumpferen Farbtons kein vollwertiger Ersatz für Disperse Red 60.

Auch die Azofarbstoffe gemäß DE-A 29 35 011, welche einen ähnlichen Farbton aufweisen wie Disperse Red 60, erreichen bei weitem nicht das hohe Echtheitsniveau des Anthrachinontyps.

Es wurde nun gefunden, daß man unter weitghender Vermeidung dieser Nachteile durch eine spezielle Kombination von ausgewählten Azofarbstoffen zu preiswerten und anwendungstechnisch hervorragenden Ersatzprodukten für den in Rede stehenden Anthrachinonfarbstoff gelangen kann.

Gegenstand der Erfindung sind somit Mischungen von mindestens zwei Azofarbstoffen, die jeweils unterschiedlichen Farbstoffklassen der Formeln

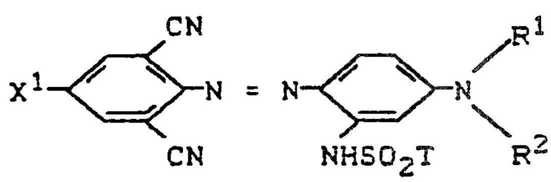

(I)

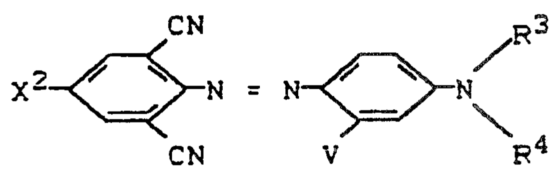

(II)

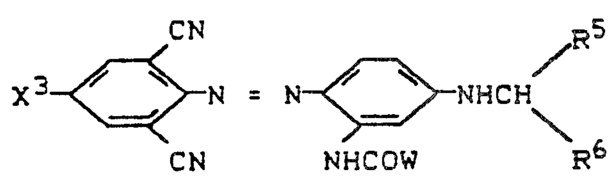

(III)

angehören, wobei

| | |
|---|---|
| $x^1$, $x^2$, $x^3$ | für Alkyl, Alkoxy oder Cycloalkyl, |
| $R^1$ - $R^6$ | für Alkyl, |
| T | für Alkyl, Chloralkyl oder Aryl, |
| V | für Alkyl und |
| W | für H, Alkyl oder Alkoxy stehen. |

Geeignete, im beliebigen Zusammenhang genannte Alkoxy- und Alkylreste sind solche mit 1-4 C-Atomen.

Geeignete Arylreste R sind z.B. Phenyl und Tolyl.

Geeignetes Chloralkyl T ist $-C_2H_4Cl$ und $-(CH_2)_4Cl$.

Geeignetes Cycloalkyl X ist Cyclohexyl.

Bevorzugt sind Farbstoffe der angegebenen Formeln, worin

| | |
|---|---|
| $x^1$, $x^2$, $x^3$ | für Methyl, Methoxy, t-Butyl oder Cyclohexyl, |
| $R^1$ - $R^6$ | für Ethyl oder n-Propyl, |
| T | für Methyl, Ethyl oder Phenyl, |
| V | für Methyl und |
| W | für Methyl, Ethyl oder n-Propyl stehen. |

Besonders bevorzugt sind Farbstoffe der Formeln I-III, worin

| | |
|---|---|
| $x^1$, $x^2$, $x^3$ | für Methyl, |
| $R^1$ - $R^4$ | für Ethyl oder n-Propyl, |
| $R^5$, $R^6$ | für Ethyl und |
| T, V, W | für Methyl stehen. |

Der Mischungsanteil der einzelnen Komponenten in den erfindungsgemäßen Gemischen beträgt im allgemeinen 10-90 Gew.-% Komponente I, 10-90 Gew.-% Komponente II und 0-80 Gew.-% Komponente III.

In einem anderen Mischungstyp bertragen die Anteile:

0 - 80 Gew.-% I, 10 - 90 % II und 10 - 90 % III.

Bevorzugte Mischungsverhältnisse sind:

| | | | | |
|---|---|---|---|---|
| 25 - 80 Gew.-% Komponente I, | | 0 Gew.-% | Komponente | I |
| 25 - 60 Gew.-% Komponente II, | bzw. | 20-80 % | " | II |
| 0 - 50 Gew.-% Komponente III. | | 20-80 % | " | III |

Ganz besonders bevorzugt sind Mischungen der Farbstoffe

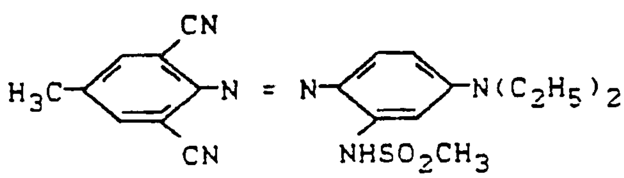

(A),

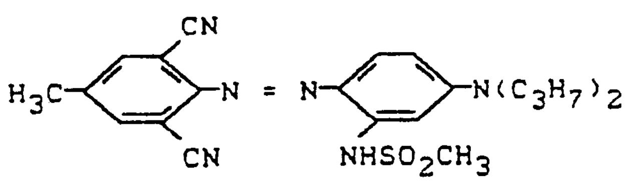

(B),

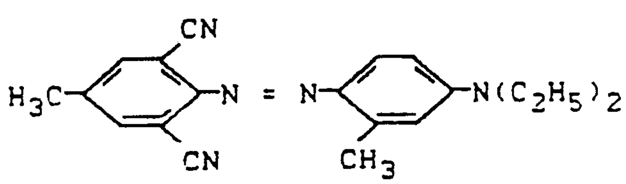

(C),

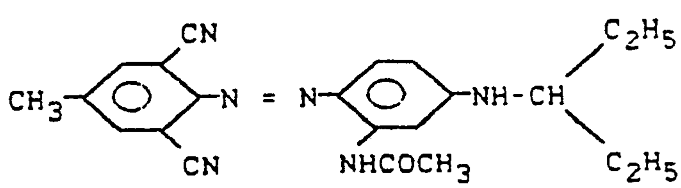

(D),

wobei Zweiermischungen von A und B ausgeschlossen und folgende Mischungsverhältnisse bevorzugt sind:

a) 5 - 90 Gew.-% Farbstoff A

0 - 90 Gew.-% Farbstoff B

5 - 90 Gew.-% Farbstoff C
0 - 30 Gew.-% Farbstoff D

b) 30 - 50 Gew.-% Farbstoff A
10 - 30 Gew.-% Farbstoff B
30 - 50 Gew.-% Farbstoff C

c) 40 - 50 Gew.-% Farbstoff A
14 - 24 Gew.-% Farbstoff B
32 - 42 Gew.-% Farbstoff C.

d) 40-60 Gew.-% Farbstoff A oder B
40-60 Gew.-% Farbstoff C

e) 40-60 Gew.-% Farbstoff C
40-60 Gew.-% Farbstoff D

Die den Gemischen zugrundeliegenden Einzalfarbstoffe sind bekannt (vgl. die oben zitierten Patentpublikstionen).

Die neuen Farbstoffmischungen können nach verschiedenen Verfahren hergestellt werden:

1. durch Abmischen der separat hergestellten und formierten Einzelfarbstoffkomponenten,
2. durch gemeinsame Formierung der separat hergestellten Einzelkomponenten,
3. durch gemeinsame "Cyanierung" der getrennt hergestellten 2,6-Dibromfarbstoffe und anschließende Formierung und
4. durch
   a) Simultankupplung von diazotiertem 2.6-Dibrom-4-X-anilin auf Mischungen der entsprechenden Anilin-Kupplungskomponenten, die der obengenannten Maßgabeformulierung entsprechen,
   b) gemeinsame "Cyanierung" der dabei erhaltenen Dibromfarbstoffe und
   c) gemeinsame Formierung.

Die "Cyanierung" von ortho-Halogenazofarbstoffen sowie die dabei erhaltenen Dicyanfarbstoffe - als solche - sind allgemein bekannt (vgl. DE-PS 1 544 563 = US-PS 3 962 209 sowie DE-OS 3 009 635).

Auch die Formierung zur Herstellung verkaufsfähiger Präparationen erfolgt nach an sich bekannten Verfahren.

Die neuen Farbstoffmischungen eignen sich zum Färben von Polyester- und Celluloseesterfasern und zeichnen sich dabei durch eine deutlich geringere Temperaturabhängigkeit des Ziehvermögens im Bereich zwischen 100 und 130 °C aus, insbesondere bei der Herstellung tiefer Farbtöne und der Anwendung kurzer Färbezeiten. In dieser Hinsicht sind sie nicht nur den Einzelkomponenten sondern auch nächstvergleichbarben bekannten Mischungen (vgl. DE-A 27 11 130) überlegen.

Man kann daher mit den anspruchsgemäßen Mischungen Textilien aus aromatischen Polyestern oder Mischtextilien aus aromatischen Polyestern und Cellulose besonders wirtschaftlich und energiesparend färben, weil die Färbetemperaturen entweder erniedrigt werden können oder weniger lange aufrecht erhalten werden müssen, um eine optimale Farbstoffausbeute zu erzielen. Die überlegene Wirtschaftlichkeit zeigt sich insbesondere bei der Erstellung hoher Farbtiefen, bei denen die anteiligen Farbstoffkosten am Färbeprozeß besonders groß sind.

Ein zusätzlicher Vorteil liegt im Maskieren von Streifigkeit, d.h. dem Ausgleichen von Materialunterschieden auf z.B. vorfixiertem Polyestergewebe.

Ein weiterer Gegenstand der Erfindung sind Mischkristalle der Farbstoffe A und C, die durch ihr Röntgenbeugungsdiagramm mit den Reflexionsintensitäten (I) 100, 60, 45 und 25 bei den Glanzwinkeln $\Theta$ 5.98°, 4.17°, 2.58° und 4.44° bzw. den Netzebenenabständen d/Å 7.4, 10.61, 17.14 und 9.95 charakterisiert sind.

Demgegenüber weisen die Einzelfarbstoffe A und C folgene Röntgendaten auf:

| | I | d/Å | Θ |
|---|---|---|---|
| Farbstoff A: | 100 | 10,11 | 4,37 |
| | 80 | 3,75 | 11,86 |
| | 60 | 3,45 | 12,9 |
| | 30 | 4,17 | 10,65 |
| Farbstoff C: | 100 | 7,12 | 6,22 |
| | 80 | 3,95 | 11,25 |
| | 80 | 3,78 | 11,77 |
| | 30 | 9,74 | 4,54 |

(ermittelt aus Debye-Scherrer Aufnahmen; λ=1.5418 Å)

Die erfindungsgemäßen Mischkristalle aus A und C haben in einem weiten Konzentrationsbereich identische Netzebenenabstände und Intensitäten.

Im allgemeinen bewegt sich das Mischungsverhältnis A/C im Bereich von 3:7 bis 7:3. Man erhält die neuen Mischkristalle auf verschiedene Weise, beispielsweise durch Umkristallisieren der mechanischen Mischung von A und C aus Aceton/Wasser oder DMF sowie durch Heißmahlung des Gemisches in Gegenwart von Dispergiermitteln oder "Mischcyanierung" in DMF.

Die neuen Mischkristalle zeichnen sich durch eine besonders hohe Färbebadstabilität aus.

In den nachfolgenden Beispielen bedeuten Teile "Gewichtsteile".

Beispiel 1

Durch Perlmahlung und anschließende Sprühtrocknung wird ein Färbepräparat aus

9,2 Teilen des Farbstoffs A
3,9 Teilen des Farbstoffs B
7,8 Teilen des Farbstoffs C
25,1 Teilen eines handelsüblichen Ligninsulfonates
47,1 Teilen eines handelsüblichen Dispergiermittels (z.B. Kondensationsprodukt aus Formaldehyd, Naphthalin und Schwefelsäure)
0,2 Teilen eines handelsüblichen Netzmittels
0,7 Teilen eines handelsüblichen Entstaubungsmittels
6,0 Teilen Restfeuchte

hergestellt.

In einem Färbebad, das mit Natriumphosphat und Essigsäure auf einen pH-Wert von 4,5 gestellt ist, werden 100 Teile eines Polyestergewebes (Polyethylenterephthalat) 30-45 Minuten bei 125-135 °C mit 1,5 g des oben beschriebenen Färbepräparates (Flottenverhältnis 1:10 bis 1:40) gefärbt.

Man erhält eine klare, blaustichig rote Färbung mit guten Echtheiten, wobei der Nachzug deutlich weniger angefärbt ist als bei einer gleich farbtiefen 1 %igen Färbung mit einem Färbepräparat, das 24,5 %

Farbstoff A und 10,5 % Farbstoff B enthält.

Beispiel 2

In einem Färbebad, das 5 g/l eines handelsüblichen Carriers (z.B. auf Basis aromatischer Carbonsäureester) enthält, mit Natriumphosphat und Essigsäure auf einen pH-Wert von 4,5 gestellt ist, werden 100 Teile eines Polyestergewebes mit 1,7 g der oben beschriebenen Farbstoffpräparation 30 Min. bei 90-98 °C gefärbt. Man erhält eine volle, tiefe Rotfärbung mit guten Echtheiten.

Zu ähnlichen Ergebnissen kommt man bei Verwendung nachstehender Mischungen.

Beispiel 3

50 Teile Farbstoff A
25 Teile Farbstoff B
25 Teile Farbstoff C

Beispiel 4

35 Teile Farbstoff A
35 Teile Farbstoff B
30 Teile Farbstoff C

Beispiel 5

60 Teile Farbstoff A
20 Teile Farbstoff B
20 Teile Farbstoff C

Beispiel 6

60 Teile Farbstoff A
30 Teile Farbstoff B
10 Teile Farbstoff C

Beispiel 7

80 Teile Farbstoff A
20 Teile Farbstoff C

Beispiel 8

80 Teile Farbstoff A
20 Teile Farbstoff D

Beispiel 9

40 Teile Farbstoff A
20 Teile Farbstoff B
20 Teile Farbstoff C
20 Teile Farbstoff D

Beispiel 10

50 Teile Farbstoff A
50 Teile Farbstoff C

Beispiel 11

50 Teile Farbstoff C
50 Teile Farbstoff D

Beispiel 12

Eine Mischung aus 66 Teilen Farbstoff A und 33 Teilen Farbstoff C wird in DMF heiß gelöst. Beim Erkalten scheiden sich Mischkristalle ab, welche durch die oben genannten Daten des Röntgenbeugungsdiagramms charakterisiert sind.

## Ansprüche

1. Mischungen von mindestens zwei roten Azofarbstoffen, die jeweils unterschiedlichen Farbstoffklassen der Formeln

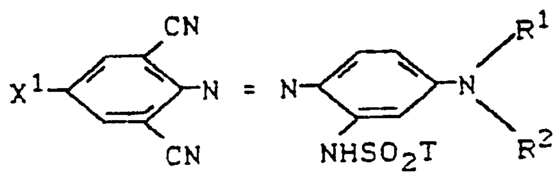

(I)

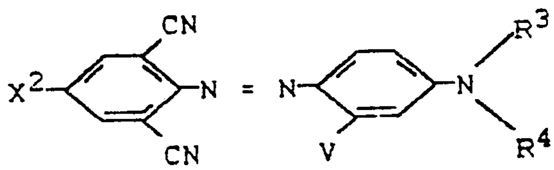

(II)

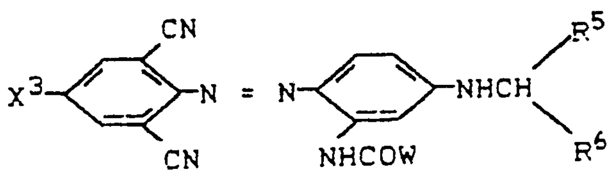

(III)

angehören, worin

| | |
|---|---|
| $X^1$, $X^2$, $X^3$ | für Alkyl, Alkoxy oder Cycloalkyl, |
| $R^1$ - $R^6$ | für Alkyl, |
| T | für Alkyl, Chloralkyl oder Aryl, |
| V | für Alkyl und |
| W | für H, Alkyl oder Alkoxy stehen. |

2. Mischungen von Azofarbstoffen gemäß Anspruch 1, dadurch gekennzeichnet, daß in den angegebenen Formeln

| | |
|---|---|
| $X^1$, $X^2$, $X^3$ | für Methyl, Methoxy, t-Butyl oder Cyclohexyl, |
| $R^1$ - $R^6$ | für Ethyl oder n-Propyl, |
| T | für Methyl, Ethyl oder Phenyl, |
| V | für Methyl und |
| W | für Methyl, Ethyl oder n-Propyl stehen. |

3. Mischungen von Azofarbstoffen gemäß Anspruch 1, dadurch gekennzeichnet, daß in den angegebenen Formeln

$X^1$, $X^2$, $X^3$ für Methyl
$R^1$ - $R^4$ für Ethyl oder n-Propyl
$R^5$, $R^6$ für Ethyl und
T, V, W für Methyl stehen.

4. Mischungen von Azofarbstoffen gemäß Anspruch 1, dadurch gekennzeichnet, daß der Mischungsanteil der einzelnen Komponenten
10 - 90 Gew.-% Farbstoff der Formel I
10 - 90 Gew.-% Farbstoff der Formel II
0 - 80 Gew.-% Farbstoff der Formel III
beträgt.

5. Mischungen von Azofarbstoffen gemäß Anspruch 1 der Formeln

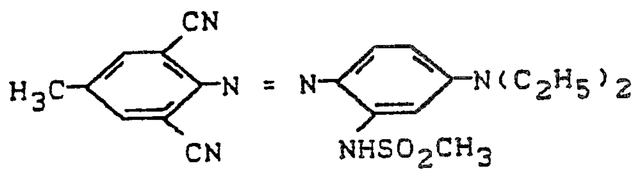
(A),

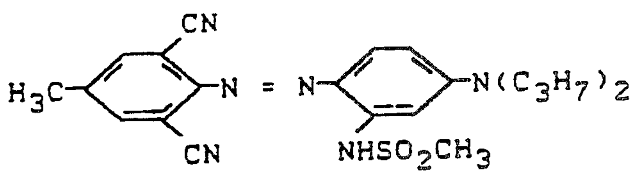
(B),

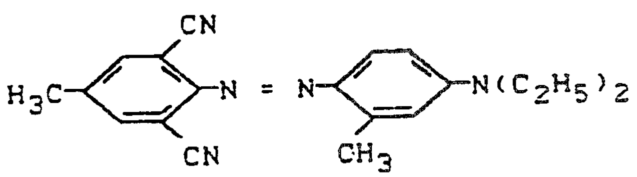
(C),

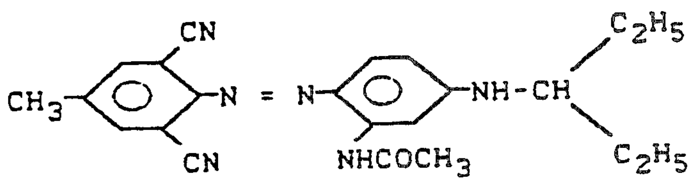
(D),

wobei Zweiermischungen von A und B ausgeschlossen sind.

6. Farbstoffpräparationen, enthaltend Mischungen von Azofarbstoffen gemäß Ansprüchen 1-5.

7. Verfahren zum Färben von Polyester- und Polyamidfasern, dadurch gekennzeichnet, daß man Farbstoffmischungen bzw. Präparationen gemäß Ansprüchen 1-6 verwendet.

## Claims

1. Mixtures of at least two red azo dyestuffs which each belong to different dyestuff classes of the formulae

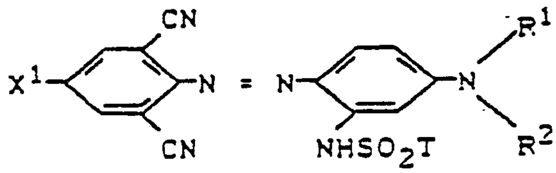

(I)

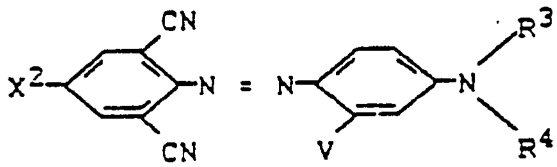

(II)

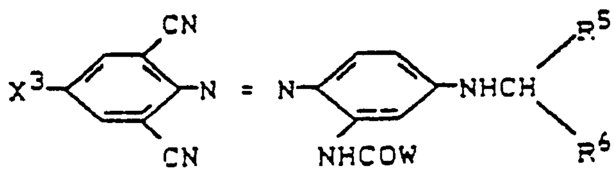

(III)

in which

$X^1$, $X^2$, $X^3$ stand for alkyl, alkoxy or cycloalkyl,
$R^1$ - $R^6$ stand for alkyl,
T stands for alkyl, chloroalkyl or aryl,
V stands for alkyl and
W stands for H, alkyl or alkoxy.

**2.** Mixtures of azo dyestuffs according to Claim 1, characterised in that in the indicated formulae

$X^1$, $X^2$, $X^3$ stand for methyl, methoxy, t-butyl or cyclohexyl,
$R^1$ - $R^6$ stand for ethyl or n-propyl,
T stands for methyl, ethyl or phenyl,
V stands for methyl and
W stands for methyl, ethyl or n-propyl.

**3.** Mixtures of azo dyestuffs according to claim 1, characterized in that in the indicated formulae

$X^1$, $X^2$, $X^3$ stand for methyl,
$R^1$-$R^4$ stand for ethyl or n-propyl,
$R^5$, $R^6$ stand for ethyl and
T, V, W stand for methyl.

**4.** Mixtures of azo dyestuffs according to Claim 1, characterised in that the proportion of the individual components in the mixture is

10 - 90% by weight of dyestuff of the formula I
10 - 90% by weight of dyestuff of the formula II
0 - 80% by weight of dyestuff of the formula III.

**5.** Mixtures of azo dyestuffs according to Claim 1 of the formulae

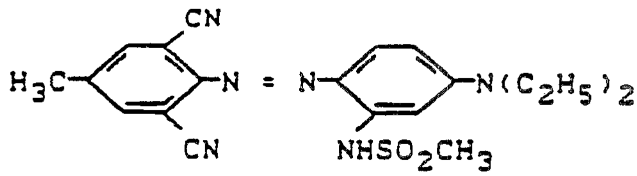

(A)

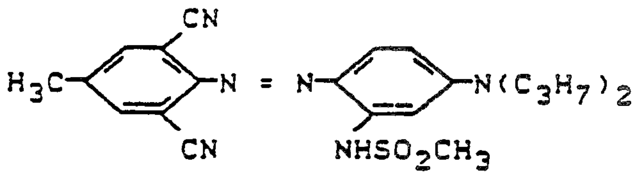

(B)

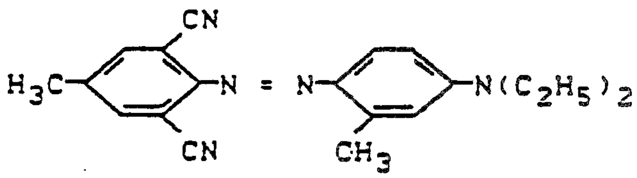

(C)

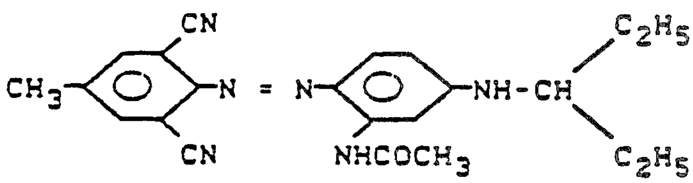

(D)

where two-dyestuff mixtures of A and B are ruled out.

6. Dyestuff formulations containing mixtures of azo dyestuffs according to Claims 1 - 5.

7. Process for dyeing polyester and polyamide fibres, characterised in that dyestuff mixtures or formulations according to Claims 1 - 6 are used.

## Revendications

1. Mélanges d'au moins deux colorants azoïques rouges, qui appartiennent chacun à des classes différentes de colorants de formules

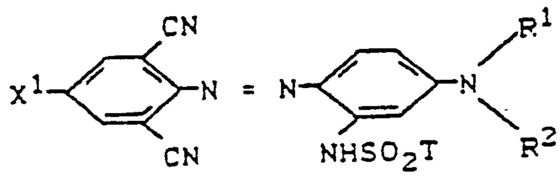

(I)

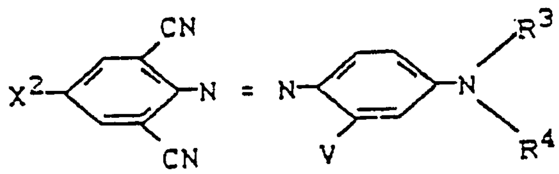

(II)

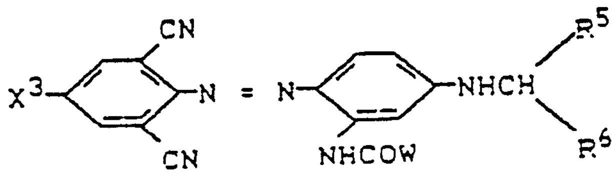

(III)

dans lesquelles

| | |
|---|---|
| $X^1$, $X^2$, $X^3$ | représentent un groupe alkyle, alkoxy ou cycloalkyle, |
| $R^1$ - $R^6$ | représentent des groupes alkyle, |
| T | représente un groupe alkyle, chloralkyle ou aryle, |
| V | représente un groupe alkyle et |
| W | représente H, un groupe alkyle ou alkoxy. |

**2.** Mélanges de colorants azoïques suivant la revendication 1, caractérisés en ce que, dans les formules indiquées

| | |
|---|---|
| $X^1$, $X^2$, $X^3$ | représentent un groupe méthyle, méthoxy, tertio-butyle ou cyclohexyle, |
| $R^1$ - R6 | représentent un groupe éthyle ou n-propyle, |
| T | représente un groupe méthyle, éthyle ou phényle, |
| V | représente un groupe méthyle et |
| W | représente un groupe méthyle, éthyle ou n-propyle. |

**3.** Mélanges de colorants azoïques suivant la revendication 1, caractérisés en ce que dans les formules indiquées

| | |
|---|---|
| $X^1$, $X^2$, $X^3$ | représentent un groupe méthyle |
| $R^1$ - $R^4$ | représentent un groupe éthyle ou n-propyle |
| $R^5$, $R^6$ | représentent un groupe éthyle et |
| T, V, W | représentent un groupe méthyle. |

**4.** Mélanges de colorants azoïques suivant la revendication 1, caractérisés en ce que la proportion des composants individuels dans le mélange est de

10 à 90 % en poids de colorant de formule I

10 à 90 % en poids de colorant de formule II

0 à 80 % en poids de colorant de formule III.

**5.** Mélanges de colorants azoïques suivant la revendication 1, de formules

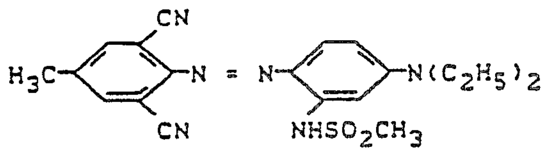 (A),

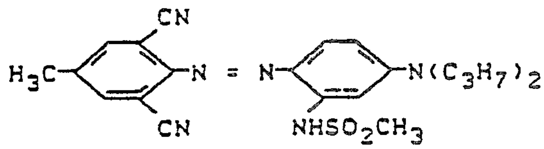 (B),

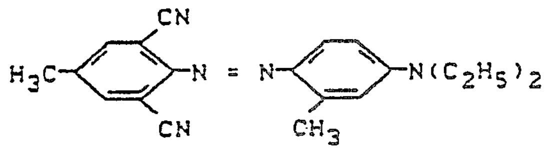 (C),

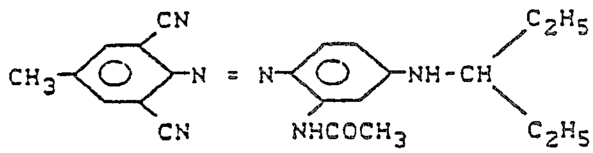 (D),

dont des mélanges binaires de A et B sont exclus.

6. Préparations de colorants, contenant des mélanges de colorants azoïques suivant les revendications 1 à 5.

7. Procédé de teinture de fibres de polyesters et de polyamides, caractérisé en ce qu'on utilise des mélanges de colorants ou des préparations suivant les revendications 1 à 6.